Europäisches Patentamt

European Patent Office

Office européen des brevets

(11) Publication number: **0 533 941 A1**

## EUROPEAN PATENT APPLICATION
### published in accordance with Art. 158(3) EPC

(21) Application number: **92906711.4**

(22) Date of filing: **11.03.92**

(86) International application number:
**PCT/JP92/00293**

(87) International publication number:
**WO 92/16939 (01.10.92 92/25)**

(51) Int. Cl.⁵: **G11B 5/70**, G11B 5/704

(30) Priority: **15.03.91 JP 74402/91**

(43) Date of publication of application:
**31.03.93 Bulletin 93/13**

(84) Designated Contracting States:
**FR**

(71) Applicant: **TDK CORPORATION**
**13-1, Nihonbashi 1-chome**
**Chuo-ku, Tokyo 103(JP)**

(72) Inventor: **KURODA, Kazuhiro**
**1-8-15-725, Anagawa**
**Chiba-shi Chiba-ken 260(JP)**
Inventor: **ISHIKAWA, Yasushi**
**847-5, Sarukubo**
**Saku-shi Nagano-ken 385(JP)**
Inventor: **TANAKA, Kazushi**
**438-1, Otsu**
**Komoro-shi Nagano-ken 384(JP)**

(74) Representative: **Fort, Jacques**
**CABINET PLASSERAUD 84, rue d'Amsterdam**
**F-75009 Paris (FR)**

(54) **MAGNETIC RECORDING MEDIUM.**

㊼ A magnetic recording medium having no interlayer adhesion and a low friction. Provided is a back layer capable of providing the magnetic recording medium having a good travelling performance, by combining conductive carbons with each other, whose specific surface areas and DBP oil absorptions are different from each other, and by adjusting the mixing ratio of the whole carbon to a binder. In a magnetic recording medium having a magnetic layer on one side of a non-magnetic support and a back layer including carbon black, an inorganic powder, and a binder on the opposite side, the carbon black is a mixture of the one of 20-80 m²/g in specific surface area and 120-200 ml/100 g in DBP oil absorption, and the one of 600-900 m²/g in specific surface area and 180-250 ml/100 g in DBP oil absorption, and the mixture ratio of the two kinds of the carbon blacks is within the range of from 8:2 to 9.5:0.5, and further, the ratio of the whole quantity of the carbon black to the binder is 35-75 weight %, preferably 40-70 weight %.

Field of the Invention

The present invention relates to a method for manufacturing a magnetic recording medium, in particular to a magnetic recording medium of excellent running property and durability.

Description of the Prior Art

Magnetic recording media of conventional tape type usually have a back layer coated on the opposite side to their surface, i.e. magnetic layer. As the volume of information to be recorded in such a medium has been growing, there exists an increasing requirement for recording in short wave-length. To meet this requirement, it is well-known that several problems, such as the occurrence of drop-out phenomenon caused by shavings peeled off from the magnetic layer and electrification on the medium, layer-to-layer adhesion between the adjacent surfaces of a wound tape due to an increased surface smoothness, friction induced by a substantial improvement in surface flatness of the magnetic layer, and "irregular winding" occurring as a result of thinning the tapes, should be solved, and for this purpose the above-mentioned back layer has been employed. Such back layers are usually produced by applying a fluid to the back of a supporting body, which fluid consists of antistatic agents, such as carbon black and graphite, lubricants, and inorganic particles of, for example, titanium oxide and alumina dispersed by mixing in a binder.

Problems to Be Solved by the Invention

Nevertheless, the above-mentioned problems, namely layer-to-layer adhesion and friction have not been solved satisfactorily. In view of these circumstances, the present invention aims to provide a magnetic recording medium free from layer-to-layer adhesion with substantially lowered friction.

Detailed Description of the Invention

Carbon black materials as generally used currently have good surface properties when used alone, thus causing adhesion phenomenon. They suffer from an additional disadvantage of difficulty in reducing the electric resistance. By combining two classes of conductive carbon black having different specific surface areas and DBP oil absorbancies, the present invention has succeeded in embodying a back layer which can provide a magnetic recording medium of excellent running property.

Accordingly, the present invention provides a magnetic recording medium including a magnetic layer on one side of a non-magnetic supporting body, and a back layer containing carbon black, inorganic powder, and binders on the opposite side of said supporting body, characterized in that said carbon black comprises a combination of two classes of carbon black, one having specific surface area ranging from 20 $m^2$/g to 80 $m^2$/g and DBP oil absorbancy ranging from 120 ml/100g to 200 ml/100g, and the other having specific surface area ranging from 600 $m^2$/g to 900 $m^2$/g and DBP oil absorbancy ranging from 180 ml/100g to 250 ml/100g, in the ratio of the former class to the latter ranging from 8 : 2 to 9.5 : 0.5, and with the entire content of said carbon black within said binders ranging from 35% to 75% by weight, preferably from 40% to 70% by weight.

As the binders suitable to be used for the back layer according to the present invention, thermoplastic resins, such as thermoplastic polyurethane resins, and vinyl chloride/vinyl acetate/vinyl alcohol copolymers; thermosetting resins, such as thermosetting polyurethane resins; electron beam-setting resins polymerized with, for example, acrylates which contain electron beam-sensitive double bonds; and the like that are well-known in the art can be used. Thermosetting and electron beam-setting resins are particularly preferable.

Lubricants applicable to the present invention include myristic acid, stearic acid, butyl strearate, butyl myristate, and the like. Furthermore, certain inorganic reinforcing agents may additionally be contained.

Examples

The following examples and comparative embodiments are provided to illustrate the present invention in further detail without any intention to limit the scope of the present invention. In these examples and comparative embodiments, the magnetic layer were formed on a magnetic recording medium according to the following procedure: using a dispersing machine, a magnetic coating composition consisting of the following components was prepared by mixing the components to complete dispersion, to which 5% by weight of Coronate L (trade name of a polyisocyanate available from Nippon Polyurethane Kogyo Ltd., Tokyo, Japan) was added as the hardener, thereafter applied to one side of a polyester film of 14 $\mu$m in

2

thickness, in order to form a coat of 4.0 microns in dry thickness, and subjected to calendering and thermosetting.

| | |
|---|---|
| Co deposited $\gamma$-Fe$_2$O$_3$ (specific surface area: 35 m$^2$/g): | 100 wt. pts. |
| vinyl chloride/acrylate copolymer: | 12 wt. pts. |
| urethane resin: | 8 wt. pts. |
| carbon black (specific surface area: 250 m$^2$/g, DBP oil absorbancy: 180 ml/100g): | 10 wt. pts. |
| $\alpha$-alumina (average particle diameter: 0.2$\mu$m): | 5 wt. pts. |
| stearic acid: | 1 wt. pt. |
| butyl myristate: | 1 wt. pt. |
| methyl ethyl ketone: | 120 wt. pts. |
| toluene: | 100 wt. pts. |

Example 1:

| | |
|---|---|
| urethane resin: | 100 wt. pts. |
| carbon black A (specific surface area: 45 m$^2$/g, DBP oil absorbancy: 170ml/100g): | 40 wt. pts. |
| carbon black B (specific surface area: 750 m$^2$/g, DBP oil absorbancy: 220 ml/100g): | 10 wt. pts. |
| lubricant (myristic acid): | 5 wt. pts. |
| polyisocyanate (Coronate L): | 15 wt. pts. |
| methyl ethyl ketone: | 200 wt. pts. |
| toluene: | 200 wt. pts. |

The above composition was subjected to mixing and kneading to a complete dispersion, using a dispersing machine, to prepare a coating material, which was then applied to the above polyester film on the opposite side to the magnetic layer to form a coat of 1.5 $\mu$m in dry thickness, followed by thermosetting, and thereafter the film was cut into a tape of 12.64 mm in length, and wound.

Example 2:

Another magnetic recording medium was obtained, following the same procedure as described in Example 1, except that the contents of carbon blacks A (specific surface area: 45 m$^2$/g, DBP oil absorbancy: 170 ml/100g) and B (specific surface area: 750 m$^2$/g, DBP oil absorbancy: 220ml/100g) were altered to 45 wt. pts. and 5 wt. pts., respectively.

Example 3:

Still other magnetic recording medium was obtained, following the same procedure as described in Example 1, except that the contents of carbon blacks A (specific surface area: 45 m$^2$/g, DBP oil absorbancy: 170 ml/100g) and B (specific surface area: 750 m$^2$/g, DBP oil absorbancy: 220ml/100g) were altered to 47.5 wt. pts. and 2.5 wt. pts., respectively.

Examples 4 - 10:

Further magnetic recording media were obtained, following the same procedure as described in Example 1, except that various values were selected for the parameters regarding carbon blacks A and B.

Comparative Embodiment 1:

A magnetic recording medium for comparison was obtained, following the same procedure as described in Example 1, except that carbon black B was omitted from the coating composition.

Comparative Embodiment 2:

Another magnetic recording medium for comparison was obtained, following the same procedure as described in Example 1, except that carbon black A was omitted from the coating composition.

Comparative Embodiment 3:

Still other magnetic recording medium for comparison was obtained, following the same procedure as described in Example 1, except that the contents of carbon blacks A and B were altered to 35 wt. pts. and 15 wt. pts., respectively.

Comparative Embodiments 4 and 5:

Further magnetic recording media for comparison were obtained, following the same procedure as described in Example 1, except that various values were selected for the parameters regarding carbon blacks A and B.

Comparison Test

Referring to the magnetic recording media obtained from Examples 1 through 10 as Samples A, B, C, D, E, F, G, M, N, and O, respectively, those obtained from Comparative Embodiments 4 and 5 as Samples H and I, and those from Comparative Embodiments 1, 2, and 3 as J, K, and L, respectively, tests were carried out on each of the samples as follows. The results obtained are summarized in Table 1.

[Deposition onto Head]

Samples were run through a commercially available magnetic recorder (a Fujitsu product, Type M2451E, Fujitsu Co., Ltd., Tokyo, Japan) 100 times each. The volume of deposited matter was evaluated on each sample, based on the observation of the head after each 100 time run, giving scores of + + + to much deposit, + + to small amount of deposit, + to slight amount, and - to no deposit.

[Changes in Kinetic Friction Coefficient]

The surface of the coated back layer of each sample was contacted with the surface of a fixed pole made of stainless steel, and passed along the surface 100 times at a velocity of 20 mm/second under a load of 40 g. The kinetic friction coefficients both at the initial and the last passes were determined to show the change in the values for each sample.

[Layer-To-Layer Adhesiveness]

The layer-to-layer adhesiveness of contacting surfaces of a wound tape was determined by visually checking the occurrence of any adhesion between the magnetic layer and the back layer during unwinding the pancake which had been formed after cutting out and winding each sample.

Effects of the Invention

As clearly shown in Table 1, the magnetic recording medium including a back layer which contains two classes of carbon black achieves excellent properties, when a class having specific surface area ranging from 20 $m^2$/g to 80 $m^2$/g and DBP oil absorbancy ranging from 120 ml/100g to 200 ml/100g is used in combination with another class having specific surface area ranging from 600 $m^2$/g to 900 $m^2$/g and DBP oil absorbancy ranging from 180 ml/100g to 250 ml/100g, in the ratio of the former class to the latter ranging from 8 : 2 to 9.5 : 0.5, and with the entire content of carbon black ranging from 40% to 70% by weight. This applies particularly in terms of layer-to-layer adhesiveness and deposition on the head.

Table 1

| Sample | Carbon wt parts | Carbon A BET m²/g | A Oil absorp | Carbon B BET m²/g | B Oil absorp | A : B | Head adhes. | Kinetic Fric. Coef. | Electric Resistance Ω | 粘着の有無 |
|---|---|---|---|---|---|---|---|---|---|---|
| Example 1 · #A | 50 | 45 | 170 | 750 | 220 | 80:20 | ○ | 0.25→0.31 | $2.2×10^5$ | ○ |
| Example 2 · #B | 50 | 45 | 170 | 750 | 220 | 90:10 | ◉ | 0.26→0.34 | $4.4×10^5$ | ○ |
| Example 3 · #C | 50 | 45 | 170 | 750 | 220 | 95:5 | ◉ | 0.26→0.33 | $4.8×10^5$ | ○ |
| Example 4 · #D | 50 | 20 | 120 | 750 | 220 | 80:20 | ○ | 0.24→0.29 | $2.0×10^5$ | ○ |
| Example 5 · #E | 50 | 80 | 200 | 750 | 220 | 80:20 | ◉ | 0.27→0.34 | $2.6×10^5$ | ○ |
| Example 6 · #F | 50 | 80 | 200 | 900 | 250 | 80:20 | ○ | 0.26→0.35 | $3.1×10^5$ | ○ |
| Example 7 · #G | 50 | 80 | 200 | 600 | 180 | 80:20 | ○ | 0.25→0.32 | $2.7×10^5$ | ○ |
| Example 4 · #H | 30 | 45 | 170 | 750 | 220 | 80:20 | × | 0.31→0.40 | $3.5×10^5$ | × |
| Example 5 · #I | 80 | 45 | 170 | 750 | 220 | 80:20 | △ | 0.28→0.32 | $3.1×10^5$ | ○ |
| Comp. Em. 1 · #J | 50 | — | — | — | — | 100:0 | △ | 0.26→0.33 | $1.1×10^6$ | ○ |
| Comp. Em. 2 · #K | 50 | 45 | 170 | 750 | 220 | 0:100 | × | 0.30→0.38 | $4.0×10^4$ | × |
| Comp. Em. 3 · #L | 50 | 45 | 170 | 750 | 220 | 70:30 | × | 0.26→0.33 | $8.3×10^5$ | × |
| Example 8 · #M | 40 | 45 | 170 | 750 | 220 | 80:20 | ○ | 0.27→0.32 | $3.0×10^5$ | ○ |
| Example 9 · #N | 60 | 45 | 170 | 750 | 220 | 80:20 | ◉ | 0.25→0.29 | $2.0×10^5$ | ○ |
| Example 10 · #O | 70 | 45 | 170 | 750 | 220 | 80:20 | ○ | 0.26→0.31 | $2.4×10^5$ | ○ |

Note: Carbon is based on 100 wt. parts of urethane resin.

## Claims

1. A magnetic recording medium including a magnetic layer on one side of a non-magnetic supporting body, and a back layer containing carbon black, inorganic powder, and binders on the opposite side of said supporting body, characterized in that said carbon black comprises a combination of two classes thereof, one having a specific surface area ranging from 20 m²/g to 80 m²/g and a DBP oil absorbancy ranging from 120 ml/100g to 200 ml/100g, and the other having a specific surface area ranging from 600 m²/g to 900 m²/g and a DBP oil absorbancy ranging from 180 ml/100g to 250 ml/100g, in the ratio of the former class to the latter ranging from 8 : 2 to 9.5 : 0.5, and with the entire content of said carbon black within said binders ranging from 35% to 75% by weight, preferably from 40% to 70% by weight.

2. A magnetic recording medium according to Claim 1, wherein both of said two classes of carbon black are conductive carbon black.

3. A magnetic recording medium according to Claim 1 or 2, wherein the entire content of said carbon black within said binders ranging from 40% to 70% by weight.

# INTERNATIONAL SEARCH REPORT

International Application No PCT/JP92/00293

**I. CLASSIFICATION OF SUBJECT MATTER** (if several classification symbols apply, indicate all) ⁶

According to International Patent Classification (IPC) or to both National Classification and IPC

Int. Cl⁵  G11B5/70

**II. FIELDS SEARCHED**

Minimum Documentation Searched ⁷

| Classification System | Classification Symbols |
|---|---|
| IPC | G11B5/70 |

Documentation Searched other than Minimum Documentation
to the Extent that such Documents are Included in the Fields Searched ⁸

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| Y | JP, A, 60-38725 (Fuji Photo Film Co., Ltd.), February 28, 1985 (28. 02. 85), Claim & US, A, 4,582,757 | 1-3 |
| Y | JP, A, 59-172123 (Hitachi Maxell, Ltd.), September 28, 1984 (28. 09. 84), Upper left column, page 3 (Family: none) | 1-3 |
| Y | JP, A, 52-88307 (Fuji Photo Film Co., Ltd.), July 23, 1977 (23. 07. 77), Lower column, page 5 & US, A, 4,132,827 | 1-3 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 23, 1992 (23. 04. 92) | May 19, 1992 (19. 05. 92) |

| International Searching Authority | Signature of Authorized Officer |
|---|---|
| Japanese Patent Office | |

Form PCT/ISA/210 (second sheet) (January 1985)